Europäisches Patentamt

European Patent Office

Office européen des brevets

Veröffentlichungsnummer: **0 282 860**

**A2**

## EUROPÄISCHE PATENTANMELDUNG

Anmeldenummer: 88103499.5

Anmeldetag: 07.03.88

Int. Cl.⁴ **F23D 14/34 , B05B 7/20 , C21D 1/52 , F24H 3/04**

Priorität: 19.03.87 DE 3708911

Veröffentlichungstag der Anmeldung:
21.09.88 Patentblatt 88/38

Benannte Vertragsstaaten:
AT BE CH DE ES FR GB GR IT LI LU NL SE

Anmelder: **Präzisions-Werkzeuge AG**
**Breitenhofstrasse 7**
**CH-8630 Rüti(CH)**

Erfinder: **Weiss, Hardy, Dr. sc. techn.**
**Im Seeblick**
**CH-8821 Hütten(CH)**

Vertreter: **Troesch, Jacques J., Dipl.-Ing. et al**
**Dr. Troesch AG Patentanwaltsbüro**
**Walchestrasse 19/Postfach**
**CH-8035 Zürich(CH)**

**(54) Verfahren und Anordnung zum Beheizen einer Werkstückoberfläche.**

(57) Um beim Beheizen einer Werkstückoberfläche, wobei ein gasförmiges Wärmetransportmedium (L) an einem wärmeabgebenden Heizbereich einer Heizeinrichtung (1) erwärmt und darnach der Werkstückoberfläche (11) zugeführt wird, zu erreichen, dass der statische Druck am Heizbereich (9) mit zunehmender Strömungsgeschwindigkeit ( $\bar{v}$ ) des gasförmigen Wärmetransportmediums (L), und damit mit zunehmender, der Werkstückoberfläche (11) pro Zeiteinheit zugeführter Wärmetransportmediumsmenge abnimmt, wird vorgeschlagen, das gasförmige Wärmetransportmedium bezüglich des Heizbereiches (9) so zu leiten, dass letzterer im Strom luvseitig liegt. Damit wird erreicht, dass der genannte statische Druck ($p_9$) bei zunehmender Strömungsgeschwindigkeit des gasförmigen Wärmetransportmediums abnimmt, womit ein ein Verbrennungsgas fördernder Differenzdruck ($p_3 - p_9$) ebenfalls erhöht wird.

FIG. 1

# Verfahren und Anordnung zum Beheizen einer Werkstückoberfläche

Die vorliegende Erfindung betrifft ein Verfahren sowie eine Anordnung zum Beheizen einer Werkstückoberfläche.

Zum Aufwärmen von Gütern, wie im Durchlaufverfahren, sei es als Vorheizung, Hauptheizung oder Nachheizung, werden häufig Gasbrenner eingesetzt. Die Aufwarmung kann dabei zum Trocknen der Güter bzw. Verdampfen von Wasser, Lösungsmitteln etc., erfolgen. Es ist auch bekannt, bei Pulverbeschichtungsverfahren, bei denen eine Werkstückoberfläche oder ein Werkstückoberflächenbereich mit Kunststoffpulver beschichtet worden ist, das Pulver zu einer Schicht zu verschweissen oder auch Textilien zu mercerisieren. Im Zusammenhang mit der Pulverbeschichtung längsausgedehnter Schweissnähte von Dosenkörpern, um die Schweissnähte innen und/oder aussen zuverlässig abzudecken - zur Verhinderung von Korrosionserscheinungen - werden üblicherweise Gasbrenner eingesetzt, die entsprechend der Ausdehnung der beschichteten Schweissnaht linear ausgedehnt sind.

Ein derartiges Verfahren und eine entsprechende Anordnung sind aus der EP-A-0 160 886 bekannt geworden.

Dabei ist eine parallel zu einer zu beheizenden Dosenschweissnaht verlaufende Gaszufuhrleitung vorgesehen mit, der Naht zugewandt, einer Vielzahl Gasaustrittsöffnungen. Letztere münden in einen durch einen längsausgedehnten Schacht gebildeten Verbrennungsraum ein, dessen Wand den Verbrennungsraum vom Werkstück trennt. Oberhalb der Brenngaszuführung ist ein ebenfalls längsausgedehnter Frischluftkanal vorgesehen, der über eine Druckluftleitung mit Frischluft gespiesen wird. Eine Vielzahl von Oeffnungen ermöglicht den Uebertritt der Frischluft aus dem Frischluftkanal in den Verbrennungsraum im genannten Schacht. Die Verbrennung erfolgt an den Gasaustrittsöffnungen im Verbrennungsraum, wo die Frischluft aufgeheizt wird. Letztere tritt darnach über eine Vielzahl über dem zu beheizenden Nahtbereich an der Schachtwand vorgesehener Bohrungen gegen den Werkstückbereich aus.

Diese Anordnung bzw. das dadurch realisierte Verfahren weist folgende Nachteile auf:

Die aus dem Verbrennungsschacht dem aufzuheizenden Werkstückoberflächenbereich zugeführte Heissluftmenge pro Zeiteinheit hängt vom Druck im Verbrennungsschacht ab. Letzterer wiederum ist einerseits abhängig von der Menge pro Zeiteinheit, mit welcher Frischluft dem Verbrennungsschacht zugeführt wird und andererseits von der pro Zeiteinheit eingedüsten und verbrannten Gasmenge. Die pro Zeiteinheit aber aus der Gaszuführleitung der Verbrennung zugeführte Gasmenge hängt vom Differenzdruck zwischen Verbrennungsraum und Gaszuführleitung ab.

Daraus ist ersichtlich, dass zwischen zugeführter Frischluftmenge pro Zeiteinheit und verbrannter Gasmenge pro Zeiteinheit eine Wechselbeziehung besteht, derart, dass eine Einstellung der der Werkstückoberfläche zugeführten Wärmemenge schwierig ist: Verstellen der Frischluftmenge beeinflusst in gegenläufigem Sinne die der Verbrennung zugeführte Gasmenge pro Zeiteinheit.

Wird beispielsweise die dem System zugeführte Frischluftmenge erhöht, so erhöht sich damit auch der Druck im Verbrennungsraum. Dies wiederum bewirkt eine Verringerung der Druckdifferenz zwischen diesem Raum und der Gaszuführleitung, womit weniger Gas der Verbrennung zugeführt wird und somit eine geringere Wärmemenge pro Zeiteinheit der Frischluft zugeführt wird. Es ergibt sich damit eine wohl höhere Austrittsmenge von aufgewärmter Frischluft aus dem Verbrennungsschacht pro Zeiteinheit, die jedoch aufgrund der nun geringeren pro Zeiteinheit verbrannten Gasmenge weniger Wärme aufgenommen hat. Es besteht eine eigentliche Gegenkopplung der der Verbrennungskammer zugeführten Frischluftmenge pro Zeiteinheit und der in dieser Kammer pro Zeiteinheit verbrannten Gasmenge, was steuerungstechnisch unerwünscht ist. Bei Verstellung der Frischluftmenge zur Steuerung der pro Zeiteinheit dem Werkstück zugeführten Wärmemenge muss mit eigens dafür vorgesehenen Organen in der Gaszuführleitung der Druck des zugeführten Gases mitverstellt werden oder die zugeführte Gasmenge pro Zeiteinheit über weite Bereiche der Druckverhältnisse konstant gehalten werden. Bekanntlich weisen Primärsysteme für das Gas, je nach eingesetztem Gas, unterschiedliche Primärdrucke auf - Gasflasche, städtische Gasnetze. Da der Differenzdruck zwischen Verbrennungsraum und Gaszuführleitung wesentlich die pro Zeiteinheit ausgegebene Wärmemenge bestimmt und der Druck im Verbrennungsraum durch die pro Zeiteinheit ein-bzw. nach Erhitzung ausgegebene Luftmenge mitgegeben ist, l" st sich das genannte Verfahren bei geringen Primärgasdrücken nur einsetzen, indem das Gas mit eigens dafür vorgesehenen Vorrichtungen unter den notwendigen Druck gesetzt wird.

Das bekannte Verfahren ist somit bezüglich seiner Steuerbarkeit und seiner Einsatzflexibilität mit unterschiedlichen Primärenergieformen nachteilig.

Es ist Aufgabe der vorliegenden Erfindung, ein Verfahren eingangs genannter Art zu schaffen, welches diese Nachteile behebt, somit eine einfache Steuerung der pro Zeiteinheit abgegebenen Wärmemenge, z.B. nur mit der pro Zeiteinheit zugeführten Frischluftmenge ermöglicht und sich weiter flexibel mit verschiedenen Primärenergien für das Aufheizen und entsprechend den verschiedensten Druckverhältnissen in primären Speisungen einsetzen lässt.

Dies wird dadurch erreicht, dass man mit einem Strom eines gasförmigen Wärmetransportmediums mindestens einen wärmeabgebenden Heizbereich tangential und/oder so, dass der Heizberich bezüglich des Stromes in Luv liegt, umströmt und den Strom darnach gegen die Werkstückoberfläche strömen lässt.

So wie bei tangentialer Umströmung des Heizbereiches stellt sich auch dann, wenn der Heizbereich bezüglich des Stromes gasförmigen Wärmetransportmediums in Luv liegt, am Heizbereich ein mit der Strömungsgeschwindigkeit des Stromes abnehmender Druck ein. Wird im Heizbereich durch Austrittsöffnungen ein Gas verbrannt, so ergibt sich hier, dass mit pro Zeiteinheit zunehmender durchströmender Menge gasförmigen Wärmetransportmediums, durch Sogwirkung, auch eine eher zunehmende Gasmenge verbrannt wird: Die Grössen, die die dem Werkstück abgegebene Wärmemenge pro Zeiteinheit primär bestimmen, nämlich die Strömungsgeschwindigkeit des gasförmigen Wärmetransportmediums und der Differenzdruck zwischen der Gaszuführleitung und dem Heizbereich, sind mitgekoppelt. Dies ermöglicht eine Steuerung der abgegebenen Wärmemenge durch die Geschwindigkeit des Wärmetransportmediums. Im weiteren lässt sich dieses Verfahren flexibel für die verschiedensten Drucke eines zugeführten Gases einsetzen bis hin zum Einsatz von Strahlen.

Bei der Beheizung eines streifenförmigen Bereiches tritt nun weiter das Problem auf, dass einerseits das Wärmetransportmedium an einer diskreten Stelle, wie mittels einer Zuführleitung von einer Primärquelle zugeführt wird, jedoch, nach seiner Erwärmung, möglichst gleichmässig entlang des zu beheizenden streifenförmigen Bereiches ausgegeben werden sollte. Dies wird durch die Massnahmen gemäss Anspruch 2 erreicht.

Wie bereits oben erwähnt, ergibt das erfindungsgemässe Verfahren die Möglichkeit, gemäss Anspruch 3 das Wärmetransportmedium mittels Flammen im Heizbereich direkt zu erhitzen und die pro Zeiteinheit der Werkstückoberfläche zugeführte Wärmemenge, unter Ausnützung der Sogwirkung des Stromes auf das flammende Medium, mit der Stromgeschwindigkeit zu stellen.

Des öftern werden mit derartigen Verfahren von der Werkstückoberfläche Stoffe ausgetrieben, die möglichst nicht in die Umgebung dringen sollten. Dies lässt sich mit den Merkmalen des Anspruchs 4 verhindern.

Dabei entsteht bezüglich Gleichmässigkeit der Rücksaugung bei der Beheizung eines streifenförmigen Bereiches das gleiche Problem wie oben, bezüglich der Ausströmung erwähnt wurde, was sich mit den Massnahmen gemäss Anspruch 5 lösen lässt.

Nun ist weiter zu berücksichtigen, dass das rückgesaugte Medium, einerseits bestehend aus vorgängig ausgedüstem, erwärmtem Wärmetransportmedium, andererseits aus an der Werkstückoberfläche aufgenommenen Substanzen, noch eine grössere oder kleinere Wärmemenge enthält. Um somit den Wirkungsgrad des Verfahrens zu erhöhen, wird weiter vorgeschlagen, die Massnahmen gemäss Anspruch 6 zu treffen.

Sind dabei die von der Werkstückoberfläche ausgetriebenen und im rückgesaugten Medium mitgetragenen Anteile selbst brennbar, so wird vorgeschlagen, gemäss Anspruch 7 zu verfahren.

Zur Lösung der obgenannten Aufgabe zeichnet sich im weiteren eine Anordnung genannter Gattung nach dem Wortlaut von Anspruch 8 aus.

Dabei ergibt sich ein höchst einfacher Aufbau der Anordnung dadurch, dass sie gemäss Wortlaut des Anspruchs 17 aufgebaut wird.

Im weiteren wird zur Erhöhung des Wirkungsgrades der Anordnung vorgeschlagen, gemäss Anspruch 20 vorzugehen.

Dadurch, dass mindestens Teile des rückgesaugten Mediums der Strömungskanalanordnung wieder zugeführt werden, wird die Restwärme im rückgesaugten Medium im Sinne eines Umlaufverfahrens wieder ausgenützt.

Bei derartigen Anordnungen sind im weiteren sehr hohe thermische Belastungen der Komponenten, aus welchen sie aufgebaut sind, zu berücksichtigen.

Beispielsweise zum Aufheizen von Werkstücken, die im Durchlaufbetrieb während vorgegebenen Zeiten aufgeheizt werden müssen, weisen derartige Anordnungen, in einer Ausdehnung, relativ grosse Dimensionen auf und entsprechend gross ist die thermische Ausdehnung.

Um dies zu berücksichtigen, wird vorgeschlagen, gemäss Anspruch 23 vorzugehen. Dadurch, dass Seitenplatten formschlüssig in Frontplatten montiert sind, ergibt sich die Möglichkeit, dass sich erstere ohne weiteres ausdehnen können, ohne dass sich dabei eine geometrische Verschiebung der Frontplatten ergibt: Der Formschluss nimmt die Ausdehnung der Seitenplatten auf. Die Frontplatten können dabei kraftschlüssig beidseits der Heizanordnung montiert werden.

Eine weitere konstruktiv einfache Möglichkeit besteht darin, die Heizanordnung an einem Tragelement zu montieren und die Strömungskanalanordnung mit der Düsenanordnung, gemäss Anspruch 25, ihrerseits an der Heizanordnung zu befestigen.

Damit kann die ganze Anordnung modulartig vom Tragelement gelöst werden, ersetzt werden oder mit weiteren Modulen ergänzt werden.

Analog zum genannten Strömungskanal wird zur Aufnahme der thermischen Ausdehnung eine Rücksaugkanalanordnung gemäss Anspruch 26 aufgebaut.

Umfasst die Heizanordnung eine Brenneranordnung, so wird weiter vorgeschlagen, an mindestens einer der Frontplatten eine Zündelektrode vorzusehen, wodurch deren elektrische Speisung nicht durch thermisch extrem belastete Bereiche geführt werden muss.

Gemäss Anspruch 28 wird weiter vorgeschlagen, dass die Heizanordnung auswechselbar eine Brenner-und/oder Widerstandsheizungsanordnung umfasst. Der obgenannte Aufbau in Plattenbauweise ermöglicht dabei ein flexibles Aneinanderreihen derartiger Anordnungen. Die Platten werden den Bedürfnissen entsprechend länger oder kürzer gewählt. Ein Gasbrenner ist auch aus der US-A 3 689 039 bekannt.

Die Erfindung wird anschliessend beispielsweise anhand von Figuren erläutert.

Es zeigen:

Fig. 1 eine prinzipielle Darstellung der erfindungsgemässen Strömung eines gasförmigen Wärmetransportmediums, bezüglich eines luvseitig angeordneten Heizbereiches,

Fig. 2 eine schematische Darstellung der erfindungsgemässen Strömung eines gasförmigen Wärmetransportmediums, tangential zu einem Heizbereich,

Fig. 3 ein Signalfluss-Diagramm zur Erläuterung der Mitwirkung von Strömungsgeschwindigkeit des Wärmetransportmediums gemäss den Fig. 1 oder 2, bezüglich eines Gasdifferenzdruckes zwischen einer Gaszuführleitung und einem Verbrennungsraum,

Fig. 4 eine schematische Querschnittsdarstellung einer bevorzugten erfindungsgemässen Anordnung zum Beheizen von streifenförmig ausgedehnten Werkstückoberflächenbereichen, wie von mittels Pulverschicht abgedeckten Dosenkörperschweissnähten im Durchlaufverfahren,

Fig. 5 eine perspektivische Darstellung einer erfindungsgemässen, zusammengestellten Anordnung,

Fig. 6 eine Aufsicht auf eine Frontplatte an der Anordnung gemäss Fig. 5, mit Formsitznuten für Seitenplatten und Abdeckung.

Fig. 7 eine schematische Darstellung einer erfindungsgemässen Anordnung, bei der die Wärme rückgesaugten Wärmetransportmediums wiederverwendet wird,

Fig. 8 eine schematische Darstellung analog derjenigen von Fig. 7, bei der brennbare Anteile im rückgesaugten Medium einer Verbrennung zur Aufheizung des Wärmetransportmediums zugeführt werden.

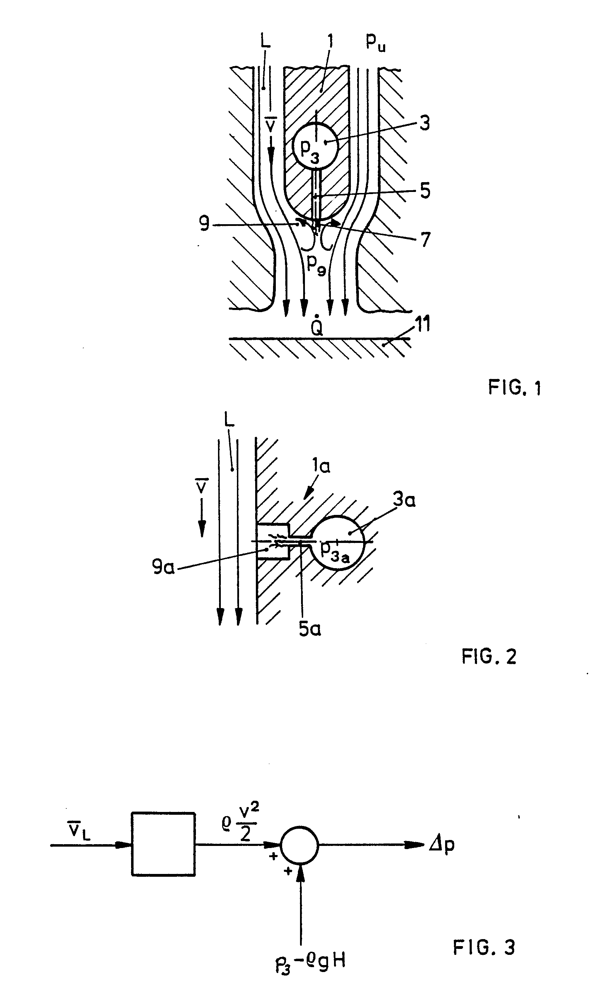

In Fig. 1 ist schematisch eine Heizeinrichtung 1 dargestellt, die eine Zuführleitung 3 für ein zu verbrennendes Gas aufweist. Flammöffnungen 5 treten von der Zuführleitung 3 an die Oberfläche der Heizeinrichtung 1 aus, wo das zugeführte Gas, wie bei 7 dargestellt, abbrennt. Die Heizeinrichtung 1 definiert, mit den Flammöffnungen 5, einen primär wärmeabgebenden Bereich 9. Ein Strom eines gasförmigen Wärmetransportmediums, wie von Frischluft L, wird bezüglich des wärmeabgebenden Bereiches 9 so geführt, dass letzterer in Luv liegt. Nach Vorbeiströmen am Bereich 9 wird die dort aufgeheizte Frischluft L einem zu beheizenden Werkstück 11 zugeführt. Bekanntlich ist in der Strömung der Luft L die Summe aus statischem Druck und Staudruck konstant gleich dem Umgebungsdruck $p_u$ in der ruhenden Umgebungsatmosphäre: Es fällt der statische Druck in dieser Strömung mit zunehmender Strömungsgeschwindigkeit. Am wärmeabgebenden Bereich 9 entsteht ein "Totwassergebiet", worin der statische Druck ungefähr dem Druck in der benachbarten Strömung entspricht und somit geringer ist als der Umgebungsdruck $p_u$. Erhöht sich die Strömungsgeschwindigkeit der Frischluft L, so verringert sich dieser statische Druck $p_s$. Herrscht in der Zuführleitung 3 ein Gasdruck $p_3$, so wird somit mit zunehmender Strömungsgeschwindigkeit $\bar{v}$ der Luft L quadratisch, die Druckdifferenz $p_3 - p_s$ erhöht, wodurch die pro Zeiteinheit aus den Flammöffnungen 5 ausströmende und verbrannte Gasmenge zunimmt. Somit wird bei dieser Anordnung bzw. bei dem entsprechenden Verfahren die dem Werkstück 11 zugeführte Wärmemenge $\dot{Q}$ direkt durch die pro Zeiteinheit durchströmende Luftmenge steuerbar, indem bei deren Erhöhung auch die dieser Strömung durch erhöhte Gasverbrennung zugeführte Wärmemenge erhöht wird.

Dasselbe Phänomen, nämlich die Erhöhung der die verbrannte Gasmenge pro Zeiteinheit bestimmenden Druckdifferenz bei Erhöhung der Strömungsgeschwindigkeit $\bar{v}$ wird bei der in Fig. 2 schematisch dargestellten Anordnung erreicht. Hier ist eine Heizeinrichtung 1a vorgesehen, mit einer Gaszuführleitung 3a, welche über Flammöffnungen 5a an einem primär wärmeabgebenden Bereich 9a der Heizeinrichtung 1a ausmündet. Das Wärmetransportmedium, beispielsweise Frischluft L, wird hier tangential am wärme abgebenden Bereich 9a vorbeigeführt, so dass auch hier mit erhöhter Strömungsgeschwindigkeit $\bar{v}$ der Frischluft L die Druckdifferenz zwischen Druck $p_{3a}$ in der Zuführleitung 3 und Druck $p_{9a}$ am Ausmündungsbereich der Flammöffnungen 5a erhöht wird.

In Fig. 3 ist ein Signalflussdiagramm entsprechend den Anordnungen der Fig. 1 und 2 dargestellt, woraus noch einmal die Mitkopplung von Strömungsgeschwindigkeit und Differenzdruck zwischen Verbrennungsraum, entsprechend den Bereichen 9 bzw. 9a und den Zuführleitungen 3 bzw. 3a ausgeführt ist. Die Strömungsgeschwindigkeit $\bar{v}$ resultiert im Staudruck

$$\rho \, \frac{v^2}{2} \qquad\qquad (1)$$

worin $\rho$ die Dichte des gasförmigen Wärmetransportmediums, wie Luft L, bezeichnet. g ist die Gravitationskonstante.

Die für die pro Zeiteinheit verbrannte Gasmenge bestimmende Druckdifferenz $\Delta p$ ergibt sich zu

$$\Delta p = p_3 - p_9 \qquad (2)$$

Daraus resultiert

$$\Delta p = p_3 - p_u + \rho \, \frac{v^2}{2} \qquad (3)$$

entsprechend dem Signalfluss-Diagramm von Fig. 3, wobei $p_u$ den Umgebungsdruck der Gesamtanordnung, d.h. den statischen Druck bei ruhender Strömung, bezeichnet.

Aus Fig. 3 ist nun klar ersichtlich, dass sich, mit Veränderung der Strömungsgeschwindigkeit $\bar{v}$ quadratisch auch die pro Zeiteinheit verbrannte Gasmenge ändert.

Dadurch wird nebst der Steuerbarkeit der dem Werkstück zugeführten Wärmemenge pro Zeiteinheit Q mittels der Strömungsgeschwindigkeit erzielt, dass ein nach dem in den Fig. 1 und 2 schematisch dargestellten Verfahren aufgebaute Anordnung flexibel mit verschiedenen primären Gasquellen betrieben werden kann, mit in einem weiten Bereich unterschiedlichen Primärdrucken, wie mit Erdgas, Propan, Butan oder Methan, ohne dass dabei Vorkehrungen getroffen werden müssten, um den primären Gasdruck der Primärquelle auf ein bestimmtes Niveau in der Zuführleitung 3 bzw. 3a anzuheben.

Im weiteren kann bei einer derartigen Anordnung die Heizeinrichtung 1 mit direkt im Kontakt mit der Frischluft L abbrennendem Gas durch eine elektrische Widerstandsheizeinrichtung ersetzt werden.

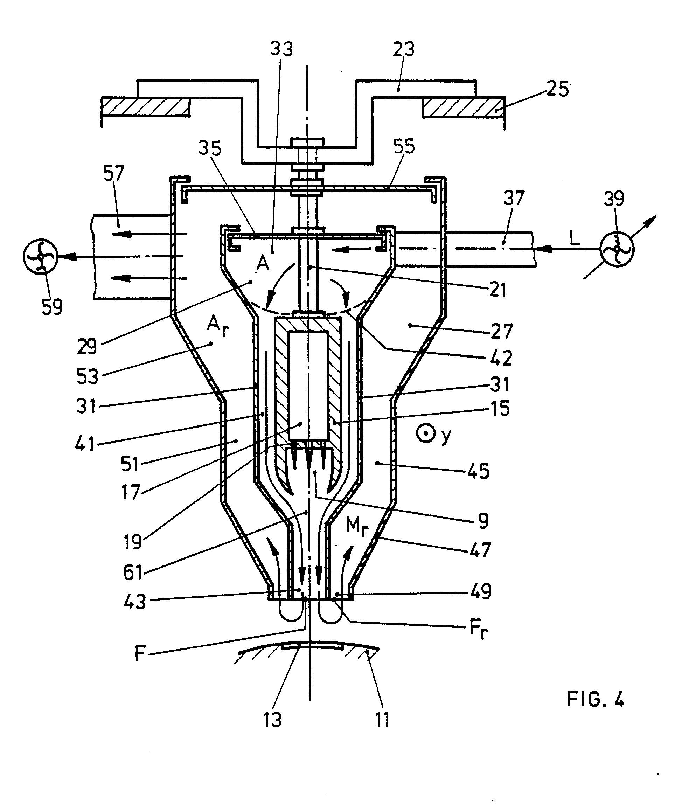

In Fig. 4 ist schematisch eine Querschnittsdarstellung einer erfindungsgemässen Anordnung dargestellt. Sie ist ausgelegt, um einen längsausgedehnten Oberflächenbereich 13 eines Werkstückes 11 aufzuheizen, wie den pulverbeschichteten Schweissnahtbereich eines Dosenkörpers. Hierzu ist die in Fig. 4 dargestellte Anordnung in Richtung y längsausgedehnt. Die ebenfalls längsausgedehnte Heizeinrichtung 1 umfasst einen oder mehrere hintereinander geschaltete Gasbrenner 15, mit einer Gaszuführleitung 17 und einer Mehrzahl in besagter Längsausdehnung verteilter Flammöffnungen 19. Die Heizeinrichtung 1 ist über mehrere Ankerstangen 21 an einem oder mehreren Aufhängeprofilen 23 befestigt, welch letztere an seitlichen Abstützungen 25 ruhen und darin eingeschoben werden können, in Richtung y.

Wie nachfolgend beschrieben werden wird, sind vorzugsweise an der Heizeinrichtung 1 auf beiden Stirnseiten Frontplatten 27, noch zu beschreibenden Aufbaus, befestigt. Die Heizeinrichtung 1 liegt koaxial in einem längsausgedehnten Strömungskanal 29 für Frischluft L als gasförmiges Wärmetransportmedium. Der Strömungskanal 29 wird durch zwei Seitenplattenstrukturen 31, wie folgt gebildet:

Oberhalb der Heizeinrichtung 1 weiten sich die Seitenplatten 31 auf und bilden einen längsausgedehnten Verteilschacht 33 für die Frischluft L. Er ist nach oben durch eine Abdeckplatte 35 verschlossen, die ihrerseits an den Ankerstangen 21 befestigt ist. In den Verteilschacht 33 mündet eine Zuführleitung 37 für die Frischluft L von einer Förderquelle 39, wie von einem Gebläse. Letzteres ist, wie angedeutet, vorzugsweise einstellbar, um die pro Zeiteinheit in den Verteilschacht 33 eingeblasene Luftmenge zu stellen. Im Bereich der Heizeinrichtung 1 verengt sich der Verteilschacht 33 und geht in zwei, vorzugsweise symmetrische Strömungsführungen 41 über, die quer zur Richtung y nach unten gegen den wärmeabgebenden Bereich 9 der Heizeinrichtung 1 verlaufen. Nach dem wärmeabgebenden Bereich 9 verengt sich, durch entsprechende Formgebung der Seitenplatten 31, der Strömungskanal 29 und bildet einen schlitzförmigen Auslass 43.

Der Strömungskanal 29 liegt nun seinerseits koaxial in einem Rückströmkanal 45. Letzterer wird einerseits durch die genannten Frontplatten gebildet, anderseits durch Rückströmkanal-Seitenplatten 47. Durch sie werden beidseits des schlitzförmigen Auslasses 43 schlitzförmige Rückströmöffnungen 49 gebildet, ebenfalls in Richtung y längsausgedehnt. Aehnlich den Strömungsführungen 41 für die Frischluft L, werden durch die genannten Seitenplatten 47 Rückströmführungen 51 gebildet, welche in einem oberen Bereich in einen durch Aufweitung der Rückströmseitenplatten 47 gebildeten Sammelkanal 53 einmünden. Letzterer ist oben durch eine Rückströmkanal-Abdeckplatte 55, welche ebenfalls an den Ankerstangen 21 gelagert ist, abgeschlossen. Eine Rückströmleitung 57 ist mit einer Saugquelle 59, wie einem Sauggebläse, verbunden.

Die über die Leitung 37 zugeführte Frischluft L verteilt sich vom Verteilschacht 33, vorzugsweise symmetrisch in die Strömungsführungen 41, wird durch den wärmeabgebenden Bereich 9, in der Strömung luvseitig liegend, in einer Vermischungs- und Homogenisierungszone 61 erhitzt und strömt aus dem Auslass 43 gegen den zu beheizenden Werkstückoberflächenbereich.

Ein Grossteil der ausgedüsten, erhitzten Luft wird über die Rückströmöffnungen 49 rückgesaugt und damit allenfalls bei einem Trocknungs-oder Aushärtungsprozess vom genannten Werkstückoberflächenbereich 13 ausgetriebene Anteile. Dieses rückgesaugte Medium strömt über die Rückströmführungen 51 nach oben in den Sammelkanal 53, von wo es durch die Saugquelle 59 abgesaugt wird.

Für die Beheizung eines, wie beschrieben, streifenförmig ausgedehnten Oberflächenbereiches 13 eines Werkstückes 11, wie der nasslack-oder pulverlack-beschichteten Schweissnaht von Dosenrümpfen, ist es von wesentlicher Bedeutung, dass die Ausströmung der erhitzten Luft auf dem Auslass 43, in Richtung y betrachtet, möglichst gleichmässig ist, d.h., dass in allen Querschnittsflächen pro Zeiteinheit die gleiche Luftmenge austritt. Dies ist im allgemeinen nicht der Fall, u.a. aufgrund der in einem diskreten Ort in den Verteilschacht einmündenden Zuführleitung 37. Es wird sich im allgemeinen auch eine zeitlich sich ändernde instationäre Verteilung der genannten Strömung entlang des Auslasses 43, in Richtung y betrachtet, einstellen. Dies wird nun dadurch verhindert, dass die Querschnittsfläche A des Verteilschachtes, betrachtet in Richtung y, die Strömungsfläche F im Ausmündungsbereich der Strömungsführungen 41 an einer Stelle, ab der signifikante Druckverluste auftreten, und der Widerstandsbeiwert $\xi$ der Strömungsführungen ab dieser Stelle bis zur Ausmündung gegen das Werkstück hin so dimensioniert werden, dass mindestens genähert gilt:

$$A \geqq \frac{2}{\sqrt{1 + \xi}} \cdot F.$$

Durch Einhalten dieser Dimensionierungs-bzw. Ausbildungsvorschrift wird eine gleichmässige Verteilung der pro Zeiteinheit ausgegebenen Luftmenge am Auslass 43, in Richtung y betrachtet, gewährleistet. Zur Erhöhung des Widerstandsbeiwertes kann in den Strömungsführungen 41 ein Strömungswiderstand 42, wie ein Gitter, eingebaut werden.

In diesem Fall ist die obgenannte Stelle, an der die Strömungsfläche F zu erfassen ist, in Fig. 4 eingetragen, beim Strömungswiderstand 42. Der massgebliche Anteil des Widerstandsbeiwertes $\xi$ wird durch diesen Strömungswiderstand 42 geliefert.

Bei der dargestellten, bevorzugterweise vorgesehenen Rücksaugung wird diese gleichmässige Verteilung durch eine allenfalls auftretende inhomogene Verteilung des pro Zeiteinheit rückgesaugten Mediums gestört. Wird eine Rücksaugung, wie dargestellt vorgesehen - es kann in gewissen Fällen auch darauf verzichtet werden - so sind ähnliche Vorschriften, wie bezüglich der Ausströmverteilung, notwendig. Es wird somit die Querschnittsfläche $A_r$ des Sammelkanals, wiederum in Richtung y betrachtet, die Strömungsfläche $F_r$ an einer Uebertrittsstelle in den Sammelkanal, bis dort, wo, in Strömungsrichtung betrachtet, signifikante Druckverluste auftreten und der Widerstandsbeiwert $\xi_r$ der Rückströmführungen so ausgelegt, dass mindestens genähert gilt:

$$A_r \geqq \frac{4}{\sqrt{1 + \xi_r}} \cdot F_r.$$

Im Beispiel gemäss Fig. 4 ergeben sich die signifikanten Druckverluste an den Rückströmöffnungen 49. Damit ist die ganze Rückströmanordnung der Fläche $A_r$ zuzuordnen, bis hin zum Sammelkanal, und es wird der Widerstandsbeiwert $\xi_r$ im Bereich der Rückströmöffnungen 49 wesentlich.

Dadurch wird eine gleichmässige Verteilung der pro Zeiteinheit rückgesaugten Mediumsmenge, in Richtung y betrachtet entlang der Rückströmöffnungen 49, und damit das Beibehalten der vorgenannten gleichmässigen Ausströmverteilung sichergestellt. Auch hier kann an den Rückströmführungen 51 ein in Fig. 4 nicht dargestellter Strömungswiderstand eingebaut werden.

Die Heizeinrichtung 1 kann, wie vorgängig erwähnt wurde, als Gasbrenner ausgebildet sein, die flexibel mit verschiedenen Gasen beschickt werden kann, welche von der entsprechenden Primärquelle, wie dem öffentlichen Gasnetz, Gasflaschen, etc. direkt und ohne Aenderung des Primärdruckniveaus aufgeschaltet werden kann. Anstelle einer Erhitzung des gasförmigen Wärmetransportmediums durch direkte Verbrennung kann diese Erhitzung auch durch Strahlung erfolgen, indem entweder der Verbrennungsprozess von der Frischluft L getrennt wird oder eine elektrische Widerstandsheizung eingesetzt wird. Die Montage der Anordnung mit dem Einschieben der Hängeprofile 23 mit der ganzen Anordnung auf die entsprechenden Abstützungen 25 ist ausserordentlich einfach.

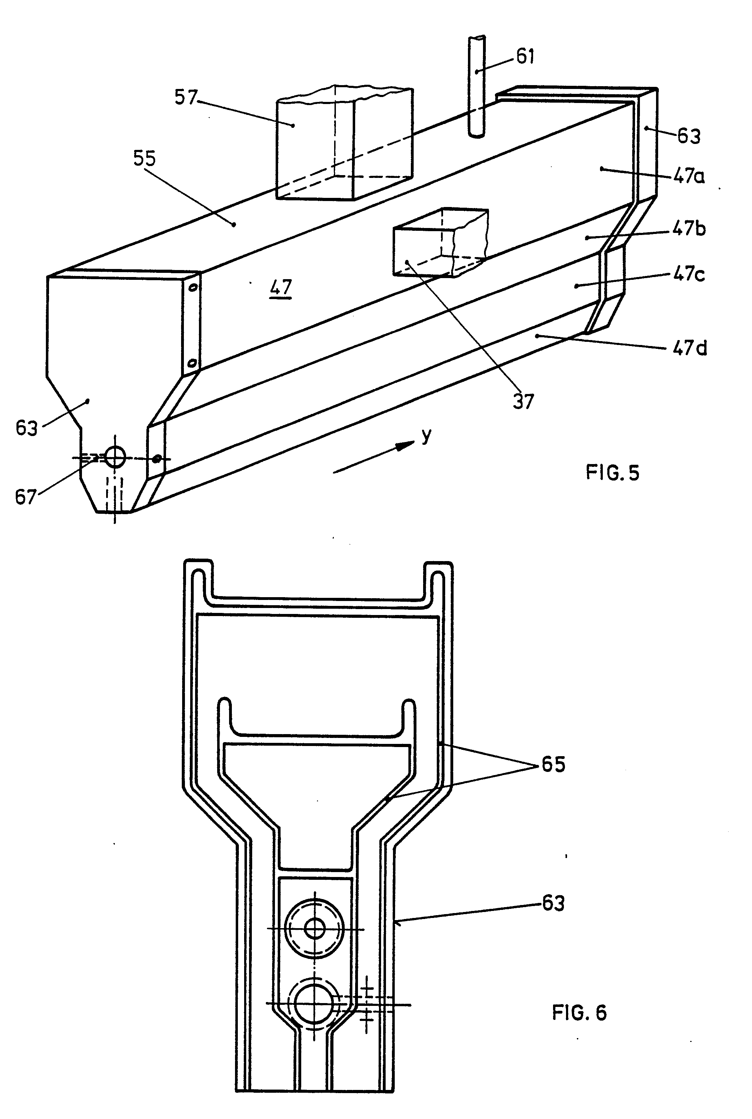

In Fig. 5 ist perspektivisch die Anordnung gemäss Fig. 4 dargestellt, wobei hier die Rückströmleitung 57 oben ausmündet und mit 61 eine Gaszuführleitung in die Zuführung 17 gemäss Fig. 4 dargestellt ist. Wie vorerwähnt wurde, umfasst die Anordnung ein Paar Frontplatten bzw. Stirnplatten 63 mit einem aus Fig. 6 ersichtlichen Aufbau. In den einwärtsgekehrten Oberflächen der Stirnplatten 63 sind Nuten 65 eingearbeitet. Rückströmseitenplatten 47, in Fig. 5 ersichtlich, sowie Seitenplatten 31 des Strömungskanals 29, in Fig. 5 verdeckt, sind durch einzelne Platten analog den Platten 47a, 47b, 47c, 47d von Fig. 5 gebildet und liegen mit ihren Stirnbereichen in den entsprechenden Nuten 65 der Stirnplatten 63. Die Stirnplatten 63 ihrerseits sind je an den zugeordneten Stirnflächen des oder der Heizeinrichtungen 1 montiert, z.B. festgeschraubt. Auch die Abdeckungen, d.h. Abdeckung 55 (in Fig. 5 ersichtlich) und Abdeckung 35 (in Fig. 5 verdeckt) liegen in entsprechenden Nuten 65 der beiden Stirnplatten 63. Die Distanz der beiden Stirnplatten, in Richtung y betrachtet, ist festgelegt durch die Ausdehnung der Heizeinrichtung 1, woran sie montiert sind. Die genannten Platten, welche die Seitenplatten bilden, liegen mit genügend Spiel formschlüssig in den Nuten 65, derart, dass unterschiedliche, thermisch bedingte Ausdehnungen von Heizeinrichtung und Seitenplatten ohne weiteres von diesen Nuten 65 aufgenommen werden können.

Mindestens an der einen der Frontplatten 63 ist, sofern es sich bei der Heizeinrichtung 1 um einen Brenner handelt, eine Zündelektrode 67 montiert, die durch diese Stirnplatte 63 in den Bereich der Flammöffnungen 19 ragt. Im Einsatz können eine oder mehrere der in Fig. 5 dargestellten modulartigen Anordnungen hintereinander geschaltet werden, je nach erwünschter Ausdehnung der Erwärmungszone und können allenfalls auch mit unterschiedlichen Primärenergien, unterschiedlichen Gasen, gas-und/oder elektrisch, betrieben werden.

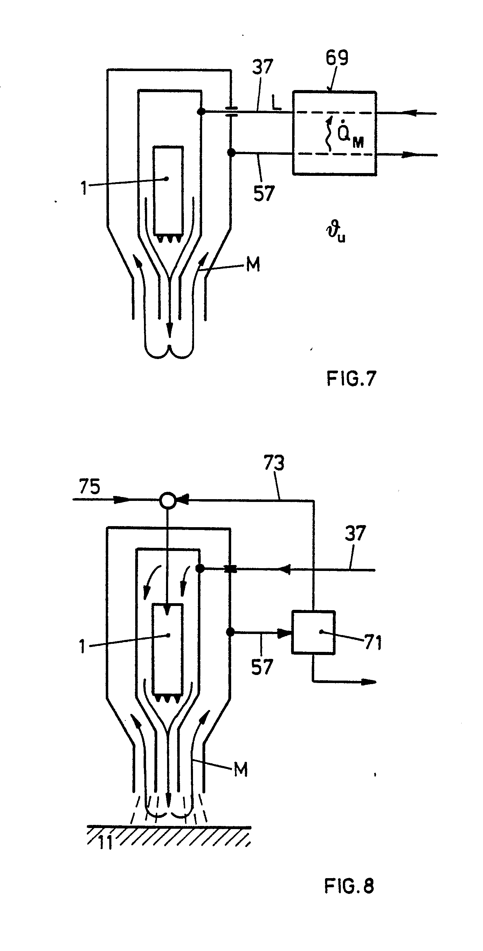

In den Fig. 7 und 8 ist je schematisch die Anordnung gemäss Fig. 4 dargestellt. Sie werden nicht noch einmal beschrieben. Gemäss Fig. 7 wird das rückgesaugte Medium M, welches noch über die Umgebungstemperatur $\vartheta_u$ erwärmt ist, mit dem zugeführten Wärmetransportmedium L thermisch derart gekoppelt, dass ein Teil der im rückgesaugten Medium M noch enthaltenen Wärmemenge $Q_M$ ausgenützt werden kann. Wie - schematisch dargestellt, kann dies beispielsweise mit Hilfe eines Wärmetauschers 69 bekannter Bauart erfolgen. Dadurch wird der Wirkungsgrad der Gesamtanordnung wesentlich erhöht.

Werden vom beheizten Bereich der Werkstückoberfläche brennbare Anteile ausgetrieben und, gemäss Fig. 8, als Teil des rückgesaugten Mediums M rückgeführt, so kann mindestens ein Teil dieser brennbaren Anteile mittels einer Abscheide-oder Filteranordnung abgeschieden werden und wird über eine Leitung 73 einer eigens dafür vorgesehenen Verbrennung oder, wie dargestellt, zusätzlich zum Brenngas - über eine Leitung 75 zugeführt - der als Brenner ausgebildeten Heizeinrichtung 1 zugeführt, womit eine Nachverbrennung mit entsprechender Erhöhung des Anordnungs-Wirkungsgrades erzielt wird.

## Ansprüche

1. Verfahren zum Beheizen einer Werkstückoberfläche, dadurch gekennzeichnet, dass man mit einem Strom (L) eines gasförmigen Wärmetransportmediums mindestens einen wärmeabgebenden Heizbereich (9) tangential und/oder so, dass der Heizbereich (9) bezüglich des Stromes (L) in Luv liegt, umströmt und den Strom (L) darnach gegen die Werkstückoberfläche (11) strömen lässt.

2. Verfahren, vorzugsweise nach mindestens einem der Ansprüche, wie nach Anspruch 1, zur Beheizung eines streifenförmigen Bereiches, dadurch gekennzeichnet, dass man das Wärmetransportmedium (L) vornehmlich in einer Richtung gegen den Bereich (11) strömen lässt, bezüglich des Heizbereiches (9) stromaufwärts das Medium (L) in eine quer zur Richtung ausgedehnte Verteilkammer (29) einbläst und die Querschnittsfläche (A)der Kammer, quer zur Richtung betrachtet, die Austrittsfläche (F)des Mediums aus der Kammer und den Widerstandsbeiwert ($\xi$) einer Strömungsführung (41) zwischen Kammeraustritt und Austrittsfläche so wählt, dass mindestens genähert gilt:

$$A \geq \frac{2}{\sqrt{1 + \xi}} \cdot F \quad .$$

3. Verfahren, vorzugsweise nach mindestens einem der Ansprüche, wie nach Anspruch 1 oder 2, dadurch gekennzeichnet, dass man das Medium mittels Flammen am Heizbereich (9) direkt erhitzt und die pro Zeit-Einheit der Werkstückoberfläche (11) zugeführte Wärmemenge (Q) unter Ausnützung der Sogwirkung des Stromes (L) auf das flammende Medium mit der Stromgeschwindigkeit ($\bar{v}$) stellt.

4. Verfahren, vorzugsweise nach mindestens einem der Ansprüche, wie nach einem der Ansprüche 1 - 3, dadurch gekennzeichnet, dass man, mindestens an Abschnitten peripher zur Ausströmung (43) gegen den Bereich, rücksaugt (49).

5. Verfahren, vorzugsweise nach mindestens einem der Ansprüche, wie nach Anspruch 4, zur Beheizung eines streifenförmigen Bereiches (13), dadurch gekennzeichnet, dass man durch eine Fläche ($F_r$) vornehmlich in einer Richtung in mindestens eine quer zur Richtung ausgedehnte Sammelkammer (53) rücksaugt (49) und dabei die Strömungsfläche ($F_r$), die Querschnittsfläche ($A_r$) der Kammer (53) quer zur Richtung betrachtet und den Widerstandsbeiwert ($\xi$) bis zum Ort der Fläche ($F_r$) so wählt, dass mindestens genähert gilt:

$$A_r \geq \frac{4}{\sqrt{1 + \xi_r}} \cdot F_r \quad .$$

6. Verfahren, vorzugsweise nach mindestens einem der Ansprüche, wie nach einem der Ansprüche 4 oder 5, dadurch gekennzeichnet, dass man die Wärme ($\dot{Q}_M$) des rückgesaugten Mediums (Mr) zur Erwärmung des dem Bereich zugeführten Mediums (L) ausnützt.

7. Verfahren, vorzugsweise nach mindestens einem der Ansprüche, wie nach einem der Ansprüche 4 - 6, für das Austreiben brennbarer Anteile an der Werkstückoberfläche, dadurch gekennzeichnet, dass man mindestens Teile des rückgesaugten Mediums einer Verbrennung für die Erwärmung des dem Bereich zuströmenden Mediums (L) zuführt (73).

8. Anordnung zum Beheizen einer Werkstückoberfläche, dadurch gekennzeichnet, dass vorgesehen sind

- eine Strömungskanalanordnung (29), die eingangsseitig mit einer Förderquelle (31) für ein gasförmiges Wärmetransportmedium (L) verbunden ist und ausgangsseitig durch eine Austrittsanordnung (43) ausmündet.

- eine Heizanordnung (1) mit mindestens einem primär wärmeabgebenden Bereich (9), wobei die Strömungskanalanordnung (29) bezüglich des wärmeabgebenden Bereiches (9) so angeordnet ist, dass ein Strom des gasförmigen Wärmetransportmediums (L) tangential am wärmeabgebenden Bereich (9) vorbeistreicht und/oder derart, dass der wärmeabgebende Bereich (9) in Luv des Stromes liegt.

9. Anordnung, vorzugsweise nach mindestens einem der Ansprüche, wie nach Anspruch 8, dadurch gekennzeichnet, dass die Heizanordnung (1) eine Brenneranordnung (17, 19) mit im Strömungskanal (29) stattfindender Verbrennung und/oder eine elektrische Widerstandsheizung, die im Strömungskanal (29) wirkt, umfasst.

10. Anordnung, vorzugsweise nach mindestens einem der Ansprüche, zum Beheizen eines streifenförmigen Werkstückoberflächenbereiches (13), dadurch gekennzeichnet, dass die Austrittsanordnung (43) eine dem Streifen entsprechende Schlitzöffnung aufweist.

11. Anordnung, vorzugsweise nach mindestens einem der Ansprüche, wie nach einem der Ansprüche 1 - 10, dadurch gekennzeichnet, dass eine Stelleinrichtung (39) für die der Werkstückoberfläche zugeführte Wärmemenge pro Zeiteinheit vorgesehen ist, die auf die Strömungsgeschwindigkeit ($\bar{v}$) des Wärmetransportmediums (L) wie über die Förderquelle wirkt.

12. Anordnung, vorzugsweise nach mindestens einem der Ansprüche, wie nach einem der Ansprüche 8 - 11, zum Beheizen eines streifenförmigen Werkstückoberflächenbereiches (13), dadurch gekennzeichnet, dass die Strömungskanalanordnung (29) eine längsausgedehnte Verteilkammer (33) umfasst, in die die Förderquelle (39) wirkt, dass quer zur Längsausdehnung (y) der Verteilkammer (33) eine längsausgedehnte Wegführkanalanordnung (41) vorgesehen ist, an welcher die Heizanordnung (1), ebenfalls längsausgedehnt (y), angeordnet ist, wobei die Wegführkanalanordnung (41) aus einem längsausgedehnten schlitzförmigen Auslass gegen den Oberflächenbereich (13) ausmündet.

13. Anordnung, vorzugsweise nach mindestens einem der Ansprüche, wie nach Anspruch 12, dadurch gekennzeichnet, dass die Querschnittsfläche (A) der Verteilkammer (33) quer zur Längsausdehnung (y), die Austrittsfläche (F) aus der Verteilkammer und der Widerstandsbeiwert ($\xi$) der Wegführkanalanordnung (41) nach der Verteilkammer so bemessen sind, dass mindestens genähert gilt:

$$A \geqslant \frac{2}{\sqrt{1+\xi}} \cdot F .$$

14. Anordnung, vorzugsweise nach mindestens einem der Ansprüche, wie nach einem der Ansprüche 8 - 13, dadurch gekennzeichnet, dass im Bereich der Austrittsanordnung (43) eine Rücksaugkanalanordnung (45) einmündet, die ausgangsseitig mit einer Saugquelle (59) verbunden ist.

15. Anordnung, vorzugsweise nach mindestens einem der Ansprüche, wie nach Anspruch 14, zum Beheizen eines streifenförmigen (13) Bereiches der Werkstückoberfläche (11), dadurch gekennzeichnet, dass die Austrittsanordnung (43) mindestens eine längsausgedehnte (y) Oeffnung umfasst, dass entlang mindestens einer Seite der Oeffnung eine vorzugsweise schlitzförmige Rücksaugöffnung (49) vorgesehen ist, die über eine Rücksaugkanalanordnung (45, 51) mit einer mit einer Saugquelle (59) verbundenen Sammelkammer (53) verbunden ist.

16. Anordnung, vorzugsweise nach mindestens einem der Ansprüche, wie nach Anspruch 15, dadurch gekennzeichnet, dass die Sammelkammer (53) längs (y) ausgedehnt ist und ihre Querschnittsfläche($A_r$)quer zu ihrer Längsausdehnung (y), die Eintrittsfläche ($F_r$) in die Sammelkammer (53) sowie der Widerstandsbeiwert ($\xi_r$) bis zur Sammelkammer (53) mindestens genähert so bemessen sind, dass gilt:

$$A_r \geqslant \frac{4}{\sqrt{1+\xi_r}} \cdot F_r .$$

17. Anordnung, vorzugsweise nach mindestens einem der Ansprüche, wie nach einem der Ansprüche 8 - 16, dadurch gekennzeichnet, dass die Heizanordnung (1) die Strömungskanalanordnung (29) teilt.

18. Anordnung, vorzugsweise nach mindestens einem der Ansprüche, wie nach Anspruch 17, dadurch gekennzeichnet, dass die Heizanordnung (1) den primär wärmeabgebenden Bereich (9) in einem Bereich (61), in welchem sich die durch die Heizanordnung (1) geteilte Strömungskanalanordnung (29) wieder vereinigt, aufweist.

19. Anordnung, vorzugsweise nach mindestens einem der Ansprüche, wie nach einem der Ansprüche 8 - 18, dadurch gekennzeichnet, dass die Heizanordnung (1) symmetrisch in der Strömungskanalanordnung (29) angeordnet ist.

20. Anordnung, vorzugsweise nach mindestens einem der Ansprüche, wie nach einem der Ansprüche 14 - 16, dadurch gekennzeichnet, dass die Rücksaugkanalanordnung (45) mit der Strömungskanalanordnung (29) verbunden ist, um mindestens Teile der Wärme des rückgesaugten Mediums (Mr) dem Wärmetransportmedium (L) wieder zuzuführen.

21. Anordnung, vorzugsweise nach mindestens einem der Ansprüche, wie nach einem der Ansprüche 14 - 20, dadurch gekennzeichnet, dass die Rücksaugkanalanordnung (45) über einen Wärmetauscher (69) mit der Strömungskanalanordnung (29) verbunden ist.

22. Anordnung, vorzugsweise nach mindestens einem der Ansprüche, wie nach einem der Ansprüche 8 - 21, dadurch gekennzeichnet, dass die Heizanordnung (1) eine Brenneranordnung umfasst und dass die Rücksaugkanalanordnung (45) mit der Brenneranordnung verbunden (73) ist, um mindestens Teile des rückgesaugten Mediums (Mr) zu verbrennen.

23. Anordnung, vorzugsweise nach mindestens einem der Ansprüche, wie nach einem der Ansprüche 8 - 22, dadurch gekennzeichnet, dass die Strömungskanalanordnung (29) sowie die Austrittsanordnung (43) in einer Richtung (y) ausgedehnt sind und gebildet werden durch ein Paar Frontplatten (63), mindestens eine Deck-und mindestens zwei Seitenplatten (35; 31), wobei die Frontplatten (63) und mindestens die Seitenplatten (31) formschlüssig (65) montiert sind, derart, dass eine Relativbewegung von Front-und Seitenplatten mindestens in der Richtung möglich ist.

24. Anordnung, vorzugsweise nach mindestens einem der Ansprüche, wie nach Anspruch 23, dadurch gekennzeichnet, dass die Heizanordnung (1) in einer Richtung (y) ausgedehnt ist und die Frontplatten (63) kraftschlüssig beidseits der Heizanordnung (1) montiert sind.

25. Anordnung, vorzugsweise nach mindestens einem der Ansprüche, wie nach Anspruch 24, dadurch gekennzeichnet, dass die Heizanordnung (1) an einem Tragelement (25) montiert ist und mindestens die Strömungskanalanordnung (29) mit der Austrittsanordnung (43) trägt.

26. Anordnung, vorzugsweise nach mindestens einem der Ansprüche, wie nach einem der Ansprüche 23 - 25, dadurch gekennzeichnet, dass eine mit einer Saugquelle (59) verbundene Rücksaugkanalanordnung (45) vorgesehen ist, die im Bereiche der Austrittsanordnung (43) eine Rücksaugöffnungsanordnung (49) aufweist, wobei die Rücksaugkanalanordnung (45) durch zu den Seitenplatten (31) der Strömungskanalanordnung (29) auf Abstand gehaltene Seitenplatten (47) gebildet ist, die mit den Frontplatten (63) formschlüssig (65) verbunden sind

27. Anordnung, vorzugsweise nach mindestens einem der Ansprüche, wie nach einem der Ansprüche 8 - 26, dadurch gekennzeichnet, dass die Heizanordnung (1) eine Brenneranordnung umfasst und dass an mindestens einer der Frontplatten (63) eine Zündelektrode (67) vorgesehen ist.

28. Anordnung, vorzugsweise nach mindestens einem der Ansprüche, wie nach einem der Ansprüche 8 - 27, dadurch gekennzeichnet, dass die Heizanordnung (1) auswechselbar eine Brenner- und/oder elektrische Widerstandsheizung umfasst.

FIG. 1

FIG. 2

FIG. 3

FIG. 4

FIG. 5

FIG. 6

FIG.7

FIG.8